# EUROPÄISCHE PATENTSCHRIFT

(11) **EP 0 971 305 B1**
(45) Veröffentlichungstag und Bekanntmachung des Hinweises auf die Patenterteilung: **04.05.2005**
(21) Anmeldenummer: 99111764.9
(22) Anmeldetag: 18.06.1999
(51) Int. Cl.: G06K 7/00

(54) **Verfahren und Vorrichtung zur Steuerung einer Kommunikation zwischen einem Terminal und einer Anzahl von Chipkarten**
Method and device for communication control between a terminal and a plurality of chip cards
Méthode et appareil pour contôler la communication entre un terminal et plusieurs cartes à puce

(30) Priorität: 08.07.1998 DE 19830526
(43) Veröffentlichungstag der Anmeldung: 12.01.2000
(73) Patentinhaber: Orga Kartensysteme GmbH, 33104 Paderborn (DE)
(72) Erfinder: Dietrich, Hanno, 33098 Paderborn (DE); Rottmann, Andreas, 49170 Hagen a.T.W. (DE)
(74) Vertreter: Richardt, Markus Albert, Dipl.-Ing.

(56) Entgegenhaltungen:
- EP-A- 0 696 016
- EP-A- 0 831 618
- EP-A- 0 942 385

## Beschreibung

Die Erfindung betrifft ein Verfahren und eine Vorrichtung zur Steuerung einer Kommunikation zwischen einem Terminal und einer Anzahl von Chipkarten gemäß dem Patentanspruch 1 bzw. 3.

Aus der DE 19635311A1 ist ein Verfahren zur Steuerung einer Kommunikation zwischen einem Terminal und einer Anzahl von Chipkarten bekannt, bei dem in einem Kommunikationsbereich eine Kommunikation zwischen dem Terminal einerseits und den Chipkarten andererseits aufrechterhalten wird. Nach einer Dekodierung der von dem Terminal ausgesandten Signale in der Chipkarte und Vergleich mit einer in der Chipkarte abgelegten charakteristischen Information kann festgestellt werden, ob die Chipkarte zu einer bestimmten Signalfrequenz korrespondiert. Es lassen sich somit Gruppen von unterschiedlich typisierten Chipkarten bilden, deren Kommunikation mit dem Terminal ungestört von Karten anderen Typs ablaufen kann.

Aus der EP 0942385A1, welche Stand der Technik gemäß Art. 54(3) EPÜ darstellt, ist ein Verfahren zum Lesen von Etiketten bekannt, wobei jedes der Etikette einen Identifizierungscode aufweist. Die Etiketten befinden sich in einem elektromagnetischen Feld einer Abfragevorrichtung. Die Abfragevorrichtung ist zum sukzessiven Lesen der Identifizierungscodes der Etiketten ausgebildet, wobei zur folgenden kommunikation zwischen Terminal und Etikett eine temporäte Kennung verwendet wird, die Kürzer ist als die jeweilige voll ständige Kennung des Etiketts.

Aus der EP 0831618A2 ist ein Verfahren zur Identifizierung mehrerer Transponder innerhalb eines gegebenen Abfragefeldes eines RF-ID-Systems bekannt. Dabei wird eine Serie von Impulsen für die Transponder übertragen.

Aus der EP 0696016A2 ist ein Verfahren zum Management der Sicherheit einer IC-Karte, beispielsweise einer Karte zur bargeldlosen Bezahlung, bekannt. Die Anzahl erlaubter Zugriffe auf ein Datenfile ist begrenzt. Wenn eine Transaktion gestartet wird, wird die Anzahl der Zugriffsoperationen auf die Datenfiles gezählt und mit der vorgegebenen maximalen Anzahl verglichen.

Aufgabe der Erfindung ist es, ein Verfahren und eine Vorrichtung zur Steuerung einer Kommunikation zwischen einem Terminal und einer Anzahl von Chipkarten derart anzugeben, dass eine sichere und schnelle Kommunikation zwischen dem Terminal und den einzelnen Chipkarten gewährleistet ist.

Zur Lösung dieser Aufgabe weist die Erfindung die Merkmale des Patentanspruchs 1 bzw. 3 auf.

Der Vorteil der Erfindung ist insbesondere darin zu sehen, daß in dem Terminal ein Mittel zu Kennung erzeugt wird, das die entsprechende Chipkarte auf einfache Weise identifiziert, so daß die Kommunikation zwischen dem Terminal und der entsprechenden Chipkarte schnell und sicher ablaufen kann.

Grundgedanke der Erfindung ist es, die bereits existierende Kennung der Chipkarte zu nutzen und diese in dem Terminal in eine kommunikationsspezifische Kennung umzuwandeln. Hierdurch kann vorteilhaft eine auf das betreffende Terminal abgestimmte Art der Identifizierung der Chipkarte ermöglicht werden, die den weiteren Kommunikationsablauf steuert. Es können gezielt in dem Kommunikationsbereich befindliche Chipkarten angesprochen und kontaktlos betrieben werden, wobei die Übertragungszeiten während des Kommunikationsablaufes verringert sind. Denn beim Aussenden einer jeden Kommunikationssequenz zwischen dem Terminal und der betreffenden Chipkarte wird die Kennung mitübertragen, so daß mit zunehmender Zahl der Kommunikationssequenzen durch die erfindungsgemäße Kennung die Zeitersparnis bei der Übertragung derselben vergrößert ist.

Nach dem erfindungsgemäßen Verfahren wird das Mittel zur Kennung in dem Terminal nach Empfang der ersten Sequenz einer jeden Chipkarte ermittelt und temporär abgespeichert, und zwar so lange, bis die Kommunikation zwischen dem Terminal einerseits und den jeweiligen Chipkarten andererseits nicht abgeschlossen ist. Danach können die gleichen Mittel zur Kennung bei der Kommunikation weiterer zeitlich nachfolgender Chipkarten verwendet werden.

Nach einer Ausgestaltung des erfindungsgemäßen Verfahrens wird das Mittel zur Kennung nach der Generierung derselben unmittelbar an die entsprechende Chipkarte übertragen und dort abgespeichert. Dies führt zu einer erheblichen Zeitersparnis, da das Mittel zur Kennung als Kennungswort wesentlich kürzer sein kann als die ursprünglich in jeder Chipkarte abgelegte Seriennummer zur Identifizierung derselben.

Nach einer Ausgestaltung der erfindungsgemäßen Vorrichtung ist das Mittel zur Kennung als Kennungswort ausgebildet, das in Anbetracht der geringen Anzahl von gleichzeitig in dem Kommunikationsbereich befindlichen Chipkarten eine geringe Länge aufweisen kann, so daß die Übertragungszeit wesentlich reduziert werden kann.

Dabei muß jedoch sichergestellt sein, daß nach Beendigung der Kommunikation zwischen dem Terminal und einer ersten Chipkarte und solange die erste Chipkarte sich noch in dem Kommunikationsbereich befindet eine Neuvergabe derselben Kennung an eine andere Chipkarte vermieden wird. Ansonsten würde die erste Chipkarte ebenfalls angesprochen. Dies kann vorzugsweise dadurch verhindert werden, daß das Terminal ein Endkommando verschickt mit einem Befehl, der die Löschung des Mittels zur Kennung in der ersten Karte bewirkt.

Nach einer Ausgestaltung der Erfindung wird das Kennungswort lediglich in einem RAM-Speicher der Chipkarte abgespeichert, so daß nach dem Entfernen der Chipkarte aus dem Kommunikationsbereich das Kennungswort automatisch gelöscht wird. Dieser Speicherbereich kann dann für andere Zwecke verwendet werden, beispielsweise für eine kontaktbehaftete Betriebsart der Chipkarte.

Weitere Vorteile der Erfindung ergeben sich aus den weiteren Unteransprüchen.

Ein Ausführungsbeispiel der Erfindung wird nachfolgend anhand der Zeichnungen näher erläutert.

Es zeigen:
- Figur 1: eine schematische Darstellung der Kommunikation von in einem elektromagnetischen Feld eines Terminals eingeführten Chipkarten,
- Figur 2: ein Ablaufdiagramm der Kennungsprozedur am Anfang einer Kommunikation zwischen dem Terminal und einer Chipkarte und
- Figur 3: ein Blockschaltbild der Dateistruktur einer Chipkarte.

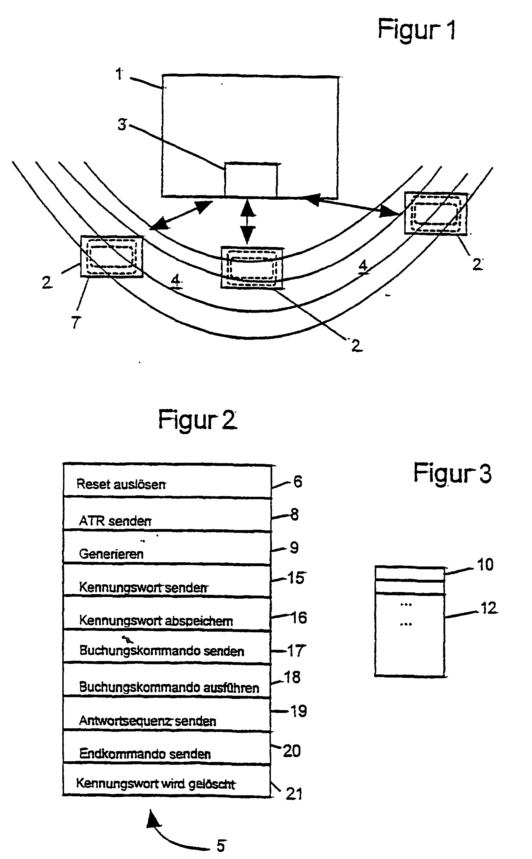

Figur 1 zeigt ein Terminal 1, das als handelsübliches Kartenlesegerät ausgebildet ist zur drahtlosen Kommunikation mit einer oder mehreren Chipkarten 2. Das Terminal weist eine Sende-/Empfangseinheit 3 auf, die zur Bildung eines Kommunikationsbereiches 4 elektromagnetische Wellen abstrahlt. In dem Kommunikationsbereich 4 ist die Intensität der elektromagnetischen Wellen derart bemessen, daß eine Kommunikation zwischen dem Terminal 1 und der betreffenden Chipkarte 2 erfolgen kann. Die Kommunikation zwischen dem Terminal 1 und einer Chipkarte 2 kann mit dem Senden einer Reset-Sequenz durch die Sende-/Empfangseinheit 3 beginnen. Üblicherweise wird die Kommunikation durch das Einbringen der Chipkarte 2 in dem Kommunikationsbereich 4 und der damit verbundenen Energieversorgung der Chipkarte 2 durch ein Power-On-Reset gestartet.

Wie aus Figur 2 zu ersehen ist, erfolgt eine Kennungsprozedur 5 unmittelbar zu Beginn der Kommunikation. Eine Reset-Sequenz 6 des Terminals 1 wird mittels einer in der Chipkarte 2 integrierten Antenne 7 empfangen und in einem nicht dargestellten Chip der Chipkarte 2 weiterverarbeitet. Als Antwort zu diesem Reset 6 sendet die Chipkarte 2 ein Answer-to-Reset (ATR) 8 mit einer die Chipkarte 2 identifizierenden Seriennummer oder dergleichen, die eine Länge von mehreren Byte hat. In einem nächsten Schritt 9 erfolgt nun in dem Terminal die Generierung des Mittels zur Kennung, das vorzugsweise als ein Kennungswort 10 ausgebildet ist und in dem Terminal 1 abgespeichert wird. Vorzugsweise wird das Kennungswort 10 in einer vorgegebenen Kennungsdatei des Speichers des Terminals 1 abgespeichert.

Die Datenlänge des Kennungswortes 10 ist von einer gleichzeitig in dem Kommunikationsbereich 4 anzunehmenden Anzahl von Chipkarten 2 abhängig; sie ist vorzugsweise 1 Byte lang, kann aber auch protokollabhängig kürzer oder länger sein, so daß mehrere Chipkarten mit einem unterschiedlichen Kennungswort 10 versehen werden können.

Nachfolgend wird in einem Schritt 15 dieses Kennungswort 10 an die durch dieses identifizierbare Chipkarte 2 gesendet, so daß es in einem weiteren Schritt 16 in einem RAM- oder EEPROM-Speicher der Chipkarte 2 abgespeichert werden kann. Das Senden der ersten Kommunikationssequenz 15 von dem Terminal zu der Chipkarte 2 erfolgt letztmalig unter Verwendung der ursprünglich die Chipkarte 2 identifizierenden Seriennummer. Die weiteren Kommunikationssequenzen des Kommunikationsablaufes 5 erfolgen nun unter Verwendung des der Chipkarte 10 zugewiesenen Kennungswortes 10.

Anschließend kann die Kommunikation zwischen der Sende-/Empfangseinheit 3 und der Chipkarte 2 fortgesetzt werden, um beispielsweise einen vorbestimmten Geldbetrag für die Benutzung eines Parkplatzes abzubuchen. Zu diesem Zweck sendet die Sende-/Empfangseinheit 3 als Teil einer Kommunikationssequenz ein Abbuchungskommando 17, daß den in der Chipkarte gespeicherten Geldbetrag um einen vorgegebenen Betrag verringert. In einem weiteren Schritt 18 wird dieser Befehl in der Chipkarte ausgeführt und der entsprechende Betrag im EEPROM der Chipkarte verringert.

Nachfolgend sendet die Chipkarte 2 in einem Schritt 19 eine Anwortsequenz, die die Buchungsdaten bezüglich dieses Bezahlvorgangs enthält.

Am Ende des Kommunikationsablaufes 5 ist es vorgesehen, daß die Sende-/Empfangseinheit 3 ein Endkommando 20 mit dem Kommando "Kennungswort 10 löschen" aussendet, das nach Empfang durch die Chipkarte 10 in einem weiteren Schritt 21 das Löschen des in der Chipkarte 2 gespeicherten Kennungswortes 10 bewirkt. Hierdurch wird vermieden, daß ein unerwünschtes wiederholtes Ansprechen der Chipkarte 2 erfolgt für den Fall, daß eine weitere in den Kommunikationsbereich 3 eintretende Chipkarte das gleiche Kennungswort 10 erhalten hat. Somit kann sicher eine Doppellbuchun vermieden werden.

Vorzugsweise wird das Kennungswort 10 in einem RAM-Speicher 12 der Chipkarte 2 abgelegt und dort mittels einer vordefinierten Speicheradresse aufgerufen. Alternativ kann das Kennungswort 10 auch in einem Festwertspeicher (EEPROM) der Chipkarte 2 abgespeichert werden.

Wesentlich bei der Erfindung ist, daß mittels des Kennungs-wortes 10 eine von mehreren Chipkarten 2 eindeutig dem Terminal 1 zuordbar und für dasselbe identifizierbar ist, so daß eine sichere und schnelle Kommunikation zwischen dem Terminal 1 und der Chipkarte 2 erfolgen kann. Nach Beendigung der Kommunikation und Verlassen des Kommunikationsbereiches 3 durch die Chipkarte 2 kann das Kennungswort 10 an eine andere Chipkarte vergeben werden. Das Terminal 1 ordnet die fest vorgegebene Kennungsfolge in Abhängigkeit von der Anzahl und der Reihenfolge des Eintritts der Chipkarten in den Kommunikationsbereich 3 als dynamische Kennungswörter den jeweiligen Chipkarten zu.

## Patentansprüche

1. Verfahren zur Steuerung einer Kommunikation zwischen einem Terminal und einer Anzahl von Chipkarten, wobei von dem Terminal kontinuierlich elektromagnetische Wellen ausgesendet werden zur Bildung eines Kommunikationsbereichs, innerhalb dessen die Kommunikation zwischen dem Terminal und den Chipkarten eingeleitet und aufrechterhalten wird, wobei in dem Terminal (1) nach der erstmalig von einer Chipkarte (2) ausgesandten Sequenz (ATR 8) ein dieselbe Chipkarte (2) identifizierendes Mittel zur Kennung (10) generiert wird, das in dem Terminal (1) abgespeichert und an die zu identifizierende Chipkarte (2) übertragen und dort ebenfalls abgespeichert wird, und dass das Mittel zur Kennung (10) in einem Endbereich der Kommunikation zwischen dem Terminal (1) und der Chipkarte (2) mittels eines vom Terminal (1) ausge-sandten Endkommandos (20) in der Chipkarte (2) gelöscht wird.

2. Verfahren nach Anspruch 1, **dadurch gekennzeichnet, dass** das Mittel zur Kennung (10) jeweils in einem Anfangsbereich der Kommunikation (5) von dem Terminal (1) zu der durch das Mittel zur Kennung (10) identifizierten Chipkarte (2) oder vice versa übertragen wird.

3. Vorrichtung zur Steuerung einer Kommunikation zwischen einem Terminal und einer Anzahl von in einem Kommunikationsbereich eines Terminals angeordneten Chipkarten, wobei in dem Kommunikationsbereich ein elektromagnetisches Feld ausgebildet ist zur Energieübertragung und/oder zur Kommunikation zwischen dem Terminal und den Chipkar-ten, wobei die Vorrichtung Mittel aufweist um im Anfangsbereich der Kommunikation zwischen dem Termi-nal (1) und der jeweiligen Chipkarte (2) ein Kennwort (10) zur Identifizierung der entsprechenden Chipkarte (2) zu generieren und in dem Terminal (1) und in einem RAM-Speicher (12) der jeweiligen Chipkarte (2) zu speichern.

4. Vorrichtung nach Anspruch 3, **dadurch gekennzeichnet, dass** das Mittel zur Kennung (10) als terminalspezifisches Kennungswort (10) ausgebildet ist.

5. Vorrichtung nach Anspruch 3 oder 4, **dadurch gekennzeichnet, dass** jeder in den Kommunikationsbereich (4) eintretenden Chipkarte (2) ein unterschiedliches Kennungswort (10) zuordenbar ist, das in Abhängigkeit von der Reihenfolge des Eintritts einer Chipkarte (2) generierbar ist.

6. Vorrichtung nach einem der Ansprüche 3 bis 5, **dadurch gekennzeichnet, dass** das Kennungswort (10) zum einen in einem Speicher des Terminals (1) und zum anderen in einem Speicher (12) der jeweiligen Chipkarte (2) abspeicherbar ist.

7. Vorrichtung nach einem der Ansprüche 3 bis 6, **dadurch gekennzeichnet, dass** die Kennungswörter (10) in einer vorgegebenen Kennungsdatei des Speichers des Terminals (1) abspeicherbar sind, wobei diese Folge von Kennungswörtern (10) als dynamische Kennungsfolge ausgebildet ist, derart, dass nach Beendigung der Kommunikation zwischen dem Terminal (1) und einer Chipkarte (2) der Speicherplatz des diese Chipkarte (2) identifizierenden Kennungswortes (10) im Speicher des Terminals (1) überschreibbar ausgebildet ist.

8. Vorrichtung nach einem der Ansprüche 3 bis 7, **dadurch gekennzeichnet, dass** die Kennungswörter (10) jeweils eine vorgegebene Länge aufweisen.

## Claims

1. Method for communication control between a terminal and a plurality of chip cards, with electro-magnetic waves being continuously transmitted by the terminal for the purpose of establishing a communication area wherein communication between the terminal and the chip cards is initiated and maintained, and after initial transmission of a sequence (ATR8) from a chip card (2), an identifying means for identification (10) of the same chip card (2) is generated for its identification (10) and stored in the terminal (1), and transferred to the chip card (2) to be identified and also stored thereat, and the means for identification (10) in an end area of communication between the terminal (1) and the chip card (2) is deleted in the chip card (2) by means of an end command (20) transmitted by terminal (1).

2. Method according to Claim 1, **characterised in that** the means of identification (10) is respectively transmitted in a starting area of communication (5) from the terminal (1) to the chip card (2) which is to be identified by identification (10) or vice versa.

3. Device for communication control between a terminal and a number of chip cards arranged in a communication area of a terminal, and in the communication area is established an electro-magnetic field for transmission of energy and/or for communication between the terminal and the chip cards, and the device is provided with means for generating in the starting area of communication between the terminal (1) and a respective chip card (2) an identifying word (10) for identification of the respective chip card (2) and for storing it in the terminal (1) and in a RAM memory (12).

4. Device according to Claim 3, **characterised in that** the means for identification (10) is designed as a terminal specific identification word (10).

5. Device according to Claim 3 or 4, **characterised in that** each chip card (2) which enters into the communication area (4) is associated with a different identification word (10) which is generated in dependence of the sequence of entry of a chip card (2).

6. Device according to one of Claims 3 to 5, **characterised in that** the identification word (10) can be stored, on the one hand, in a memory of the terminal (1) and, on the other hand, in a memory (12) of the respective chip card (2).

7. Device according to one of Claims 3 to 6, **characterised in that** the identification words (10) can be stored in a given identification index of the memory of the terminal (1), and this sequence of identification words (10) is designed as dynamic identification sequence in such a manner that on completion of the communication between the terminal (1) and a chip card (2) the storage location of the identification word (10) which identifies this chip card (2) can be overwritten in the memory of the terminal (1).

8. Device according to one of Claims 3 to 7, **characterised in that** the identification words (10) are of a given length.

## Revendications

1. Procédé de commande d'une communication entre un terminal et plusieurs cartes à puce, selon lequel des ondes électromagnétiques sont envoyées en continu depuis le terminal pour former une zone de communication dans laquelle est introduite et maintenue la communication entre le terminal et les cartes à puce, ou génère un moyen d'identification (10) identifiant la même carte à puce (2) dans le terminal (1) après la séquence (ATR8) envoyée une première fois par une carte à puce (2), le moyen d'identification (10) étant enregistré dans le terminal (1), transmis à la carte (2) à identifier où il est également enregistré,
**caractérisé en ce que**
le moyen d'identification (10) est supprimé dans une zone terminale de la communication entre le terminal (1) et la carte à puce (2) à l'aide d'une commande terminale (20) envoyée par le terminal (1) dans la carte à puce (2).

2. Procédé selon la revendication 1,
**caractérisé en ce que**
le moyen d'identification (10) est transmis respectivement dans une zone initiale de la communication (5) par le terminal (1) jusqu'à la carte à puce (2) identifiée par le moyen d'identification (10) ou vice-versa.

3. Dispositif de commande d'une communication entre un terminal et plusieurs cartes à puce disposées dans une zone de communication d'un terminal, formant un champ électromagnétique dans la zone de communication pour transférer l'énergie et/ou communiquer entre le terminal et les cartes à puce,
**caractérisé par**
des moyens pour générer un mot de passe (10) d'identification de la carte à puce respective (2) dans la zone initiale de la communication entre le terminal (1) et la carte à puce respective (2) afin d'enregistrer la carte à puce correspondante (2) dans le terminal (1) et dans une mémoire RAM (12).

4. Dispositif selon la revendication 3,
**caractérisé en ce que**
le moyen d'identification (10) est conçu en tant que mot de passe (10) spécifique au terminal.

5. Dispositif selon la revendication 3 ou 4,
**caractérisé en ce qu'**
un mot de passe (10) diffèrent pouvant être généré en fonction de la séquence de l'entrée d'une carte à puce (2) peut être associé à chaque carte à puce (2) entrant dans la zone de communication (4).

6. Dispositif selon l'une quelconque des revendications 3 à 5,
**caractérisé en ce que**
le mot de passe (10) peut être enregistré d'une part dans une mémoire du terminal (1) et d'autre part dans une mémoire (12) de la carte à puce respective (2).

7. Dispositif selon l'une quelconque des revendications 3 à 6,
**caractérisé en ce que**
les mots de passe (10) peuvent être enregistrés dans un fichier d'identification donné de la mémoire du terminal (1), cette série de mots de passe (10) étant conçue sous forme de séquence d'identification dynamique de sorte qu'après la fin de la communication entre le terminal (1) et une carte à puce (2), de l'espace de stockage du mot de passe (10) identifiant cette carte à puce (2) soit conçu de manière à pouvoir être écrasé dans la mémoire du terminal (1).

8. Dispositif selon l'une quelconque des revendications 3 à 7,
**caractérisé en ce que**
les mots de passe (10) présentent respectivement une longueur donnée.
